# EUROPEAN PATENT APPLICATION

(11) **EP 3 691 165 A1**
(43) Date of publication of application: **05.08.2020**
(21) Application number: 18863723.5
(22) Date of filing: 06.09.2018
(51) Int. Cl.: H04L 5/00

(54) **METHOD FOR CONFIGURING SPECIAL SUBFRAME, DETECTION METHOD, BASE STATION, AND TERMINAL**

(30) Priority: 29.09.2017 CN 201710912212
(71) Applicant: China Mobile Communication Co., Ltd Research Institute, Beijing 100053 (CN); China Mobile Communications Group Co., Ltd, Beijing 100032 (CN)
(72) Inventor: DONG, Jing, Beijing 100032 (CN); JIANG, Tianming, Beijing 100032 (CN); HOU, Xueying, Beijing 100032 (CN); HU, Lijie, Beijing 100032 (CN)
(74) Representative: GPI Brevets
(86) International application number: PCT/CN2018/104251
(87) International publication number: WO 2019/062501

(57) **Abstract**

A method of configuring a special subframe, a detection method, a base station, and a terminal are provided. The method of configuring a special subframe includes: in case that a special subframe configuration 10 is adopted, transmitting, to a terminal, indication information regarding a configuration of a downlink pilot timeslot (DwPTS), where the indication information regarding the configuration of the DwPTS is used to indicate whether a common reference signal (CRS) is transmitted in the DwPTS and/or indicate whether a physical downlink shared channel (PDSCH) is transmitted in the DwPTS; and transmitting the indication information to the terminal.

## Description

### CROSS-REFERENCE TO RELATED APPLICATION

The present application claims a priority to Chinese Patent Application No. 201710912212.0 filed in China on September 29, 2017, a disclosure of which is incorporated in its entirety by reference herein.

### TECHNICAL FIELD

The present disclosure relates to the field of communication, in particular to a method of configuring a special subframe, a detection method, a base station, and a terminal.

### BACKGROUND

In consideration of interference from a remote base station, an interfering base station transmits a characteristic sequence in a downlink pilot timeslot (DwPTS), and a victim base station performs detection in an uplink symbol. A base station identity (ID) may be acquired based on a characteristic sequence ID and a transmission frame number, thereby implementing precise positioning.

In the related art, a frequency may be adjusted to reduce interference for regions with a fixed interference relationship. Optionally, a special subframe configuration may be rolled back to 3:9:2, especially in an area relatively close to an interference source. However, resource utilization will be reduced. Optionally, an antenna downtilt angle may be increased and a high-gain antenna may be used instead, so that the base station is exposed to effectively reduced interference and less interference is caused to other stations.

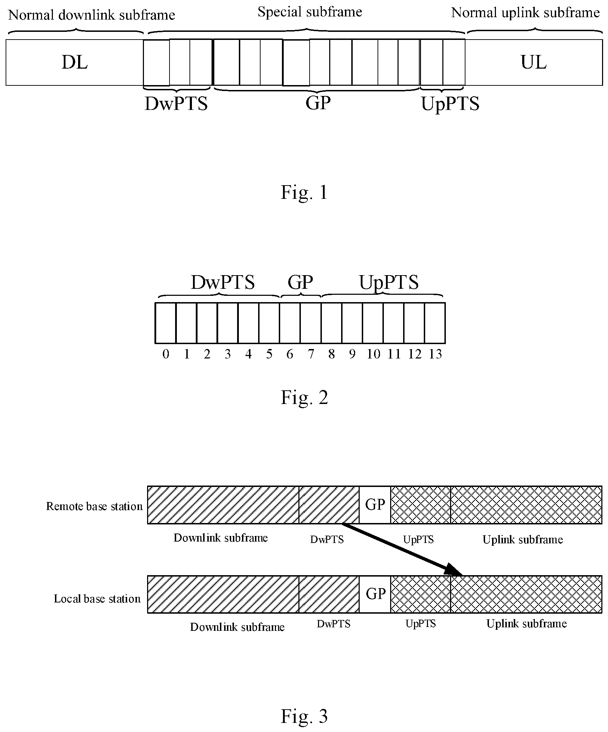

As shown in Fig. 1, to further increase an equivalent guard period (GP), on the basis of the special subframe configuration being rolled back to 3:9:2 (that is, a ratio of quantities of symbols occupied by a DwPTS, a GP and an uplink pilot timeslot (UpPTS) is 3:9:2), signal transmission in a downlink subframe 0/5 (that is, the 0^{th} downlink subframe or the 5^{th} downlink subframe) of an interfering base station may also be restricted. However, downlink performance is degraded severely, and there is a relatively high terminal compatibility risk.

To increase a GP and enhance uplink transmission resources, a special subframe configuration of 6:2:6 may be considered, as shown in Fig. 2. However, there is still intense interference from a remote base station, which not only causing interference to an UpPTS, but also causing interference to subsequent normal uplink subframes, as shown in Fig. 3.

### SUMMARY

The present disclosure provides a method of configuring a special subframe, a detection method, a base station, and a terminal, to reduce downlink transmission in a special subframe, increase a GP, enhance uplink transmission resources, thereby reducing interference from a remote base station.

The present disclosure provides in some embodiments a method of configuring a special subframe, including: in case that a special subframe configuration 10 is adopted, transmitting, to a terminal, indication information regarding a configuration of a DwPTS, where the indication information regarding the configuration of the DwPTS is used to indicate whether a common reference signal (CRS) is transmitted in the DwPTS and/or indicate whether a physical downlink shared channel (PDSCH) is transmitted in the DwPTS; and transmitting the indication information to the terminal.

The indication information is used to indicate whether a CRS is transmitted on the fifth symbol of the DwPTS.

The indication information is used to indicate that a CRS is only transmitted on the first symbol of the DwPTS.

In case that the indication information indicates that no CRS is transmitted on the fifth symbol of the DwPTS, the terminal performs measurement and/or channel estimation for demodulation in a special subframe based on only a CRS on the first symbol of the DwPTS.

In case that the indication information indicates that a CRS is only transmitted on the first symbol of the DwPTS, the terminal performs measurement and/or channel estimation for demodulation in a special subframe based on only the CRS on the first symbol of the DwPTS.

In case that the indication information indicates that no PDSCH is transmitted in the DwPTS, the terminal does not perform demodulation of a PDSCH in a special subframe.

The present disclosure further provides in some embodiments a base station, including: a processor, configured to: in case that a special subframe configuration 10 is adopted, transmit, to a terminal, indication information regarding a configuration of a DwPTS, where the indication information regarding the configuration of the DwPTS is used to indicate whether a CRS is transmitted in the DwPTS and/or indicate whether a PDSCH is transmitted in the DwPTS; and a transceiver, configured to transmit the indication information to the terminal.

The indication information is used to indicate whether a CRS is transmitted on the fifth symbol of the DwPTS; and/or the indication information is used to indicate that a CRS is only transmitted on the first symbol of the DwPTS.

The present disclosure further provides in some embodiments a method of detecting a signal in a special subframe, including: receiving indication information transmitted by a base station, where the indication information is indication information regarding a configuration of a DwPTS and transmitted to a terminal in case that a special subframe configuration 10 is adopted, and the indication information regarding the configuration of the DwPTS is used to indicate whether a CRS is transmitted in the DwPTS and/or indicate whether a PDSCH is transmitted in the DwPTS; and detecting a signal in the DwPTS according to the indication information.

When the indication information is used to indicate whether a CRS is transmitted on the fifth symbol of the DwPTS, the detecting a signal in the DwPTS according to the indication information includes: in case that the indication information indicates that no CRS is transmitted on the fifth symbol of the DwPTS, performing, by the terminal, measurement and/or channel estimation for demodulation in a special subframe based on only a CRS on the first symbol of the DwPTS.

When the indication information is used to indicate that a CRS is only transmitted on the first symbol of the DwPTS, the detecting a signal in the DwPTS according to the indication information includes: according to the indication information, performing, by the terminal, measurement and/or channel estimation for demodulation in a special subframe based on only the CRS on the first symbol of the DwPTS.

When the indication information is used to indicate whether a PDSCH is transmitted in the DwPTS, the detecting a signal in the DwPTS according to the indication information includes: in case that the indication information indicates that no PDSCH is transmitted in the DwPTS, not performing, by the terminal, demodulation of a PDSCH in a special subframe.

The present disclosure further provides in some embodiments a terminal, including: a transceiver, configured to receive indication information transmitted by a base station, where the indication information is indication information regarding a configuration of a DwPTS and transmitted to the terminal in case that a special subframe configuration 10 is adopted, the indication information regarding the configuration of the DwPTS is used to indicate whether a CRS is transmitted in the DwPTS and/or indicate whether a PDSCH is transmitted in the DwPTS; and detect a signal in the DwPTS according to the indication information.

When the indication information is used to indicate whether a CRS is transmitted on the fifth symbol of the DwPTS, in case that the indication information indicates that no CRS is transmitted on the fifth symbol of the DwPTS, the terminal performs measurement and/or channel estimation for demodulation in a special subframe based on only a CRS on the first symbol of the DwPTS.

When the indication information is used to indicate that a CRS is only transmitted on the first symbol of the DwPTS, according to the indication information, the terminal performs measurement and/or channel estimation for demodulation in a special subframe based on only the CRS on the first symbol of the DwPTS.

When the indication information is used to indicate whether a PDSCH is transmitted in the DwPTS, in case that the indication information indicates that no PDSCH is transmitted in the DwPTS, the terminal does not perform demodulation of a PDSCH in a special subframe.

The present disclosure further provides in some embodiments a method of configuring a special subframe, including: transmitting, by the first base station that remotely interferes with a second base station, a signal to a terminal based on a first configuration of a special subframe; and transmitting, by the second base station, a signal to the terminal based on a second configuration of a special subframe, where the first configuration includes a ratio of resources occupied by a DwPTS, a GP and an UpPTS in a special subframe being 3:5:6; and the second configuration includes a ratio of resources occupied by a DwPTS, a GP and an UpPTS in a special subframe being 9:3:2.

The present disclosure further provides in some embodiments a base station, including: a processor, configured to configure a special subframe based on a first configuration of a special subframe, where the first configuration includes a ratio of resources occupied by a DwPTS, a GP and an UpPTS in a special subframe being 3:5:6; and a transceiver, configured to transmit a signal to a terminal based on the first configuration of the special subframe.

The present disclosure further provides in some embodiments a communication device, including: a processor and a storage storing therein a computer program, where the computer program is configured to be executed by the processor to implement the foregoing methods.

The present disclosure further provides in some embodiments a computer-readable storage medium, storing therein a computer program, where the computer program is configured to be executed by a processor to implement the foregoing methods.

The foregoing solutions of the present disclosure at least have the following beneficial effects: in the foregoing solutions of the present disclosure, in case that a special subframe configuration 10 is adopted, indication information regarding a configuration of a DwPTS is transmitted to a terminal, where the indication information regarding the configuration of the DwPTS is used to indicate whether a CRS is transmitted in the DwPTS and/or indicate whether a PDSCH is transmitted in the DwPTS. The indication information may be transmitted to the terminal by means of high-layer signaling. In this way, a terminal receives indication information transmitted by a base station by means of high-layer signaling, and detects a signal in the DwPTS according to the indication information, to restrict a special subframe configuration measurement behavior of the terminal, such that it is made clear that user equipment (UE) performs measurement and/or channel estimation for demodulation in a special subframe based on only a CRS on the first symbol, and does not perform demodulation of a PDSCH, thereby reducing interference from a remote base station.

### BRIEF DESCRIPTION OF THE DRAWINGS

To describe the technical solutions in the embodiments of the present disclosure more clearly, the accompanying drawings required for describing the embodiments of the present disclosure are briefly described hereinafter. Apparently, the drawings accompanying the following descriptions show only some embodiments of the present disclosure, and a person of ordinary skill in the art may still derive other drawings from these accompanying drawings without creative efforts.
Fig. 1 is a schematic diagram of a resource ratio of a special subframe in the related art;
Fig. 2 is a schematic diagram showing that a ratio of resources occupied by a DwPTS, a GP and an UpPTS is 6:2:6;
Fig. 3 is a diagram showing interference from a remote base station when a resource ratio of a special subframe is 6:2:6;
Fig. 4 is a flowchart of a method of configuring a special subframe according to an embodiment of the present disclosure;
Fig. 5 is a diagram showing transmission resources in one physical resource block (PRB) when a resource ratio of a special subframe is 6:2:6 according to an embodiment of the present disclosure;
Fig. 6 is a schematic diagram of not transmitting a PDSCH in a data region of a DwPTS, which is enabled by a base station scheduling, when a resource ratio of a special subframe is 6:2:6 according to an embodiment of the present disclosure;
Fig. 7 is a schematic diagram of not transmitting a CRS in a data region of a DwPTS, which is indicated by using high-layer signaling, when a resource ratio of a special subframe is 6:2:6 according to an embodiment of the present disclosure;
Fig. 8 is a flowchart of a method of detecting a signal in a special subframe according to the present disclosure;
Fig. 9 is a schematic diagram showing that a special subframe configuration of 9:3:2 is adopted in both a remote base station and a local base station;
Fig. 10 is a schematic diagram showing that a special subframe configuration of 3:5:6 is adopted in a remote base station and a special subframe configuration of 9:3:2 is adopted in a local base station.

### DETAILED DESCRIPTION

Exemplary embodiments of the present disclosure will be described below in further detail with reference to the accompanying drawings. Exemplary embodiments of the present disclosure are shown in the accompanying drawings. However, it should be understood that the present disclosure may be implemented in various forms and should not be construed as being limited to the embodiments set forth herein. Rather, these embodiments are provided so that the present disclosure will be thoroughly and completely understood, and will fully convey the scope of the present disclosure to those skilled in the art.

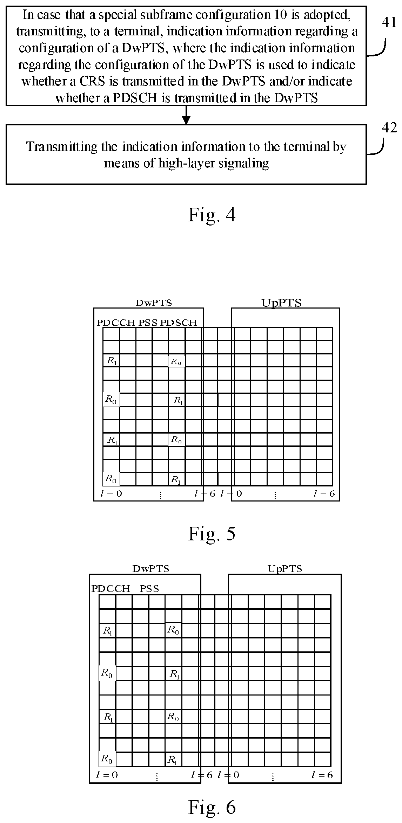

As shown in Fig. 4, the present disclosure provides in some embodiments a method of configuring a special subframe. The method includes the following steps.

A step 41 includes: in case that a special subframe configuration 10 is adopted, transmitting, to a terminal, indication information regarding a configuration of a DwPTS, where the indication information regarding the configuration of the DwPTS is used to indicate whether a CRS is transmitted in the DwPTS and/or indicate whether a PDSCH is transmitted in the DwPTS. Here, the special subframe configuration includes a ratio of resources occupied by a DwPTS, a GP and an UpPTS being 6:2:6. Specifically, as shown in Fig. 2, the DwPTS occupies six orthogonal frequency division multiplexing (OFDM) symbol resources, the GP occupies two OFDM symbol resources, and the UpPTS occupies six OFDM symbol resources. Further, as shown in Fig. 5, when a resource ratio of a special subframe is 6:2:6, transmission resources in one PRB include a physical downlink control channel (PDCCH), a primary synchronization signal (PSS), a CRS, a PDSCH, a GP, and an UpPTS.

A step 42 includes: transmitting the indication information to the terminal. The indication information may be transmitted to the terminal by means of high-layer signaling. To allow both a terminal in a radio resource control (RRC) idle state and a terminal in an RRC connected state to receive the high-layer signaling, the high-layer signaling may be broadcast information transmission or UE specific RRC signaling. Specifically, signaling may be added to a time division duplex (TDD)-Config information element to indicate whether a CRS is transmitted in a data region of the DwPTS.

A specific format of the TDD-Config information element is as follows:

```
-- ASN1 START
 TDD-Config ::= SEQUENCE {
            subframeAssignment ENUMERATED {
                                                 sa0, sa1, sa2, sa3, sa4, sa5,
                                                 sa6},
            specialSubframePatterns ENUMERATED {
                                                 ssp0, ssp1, ssp2, ssp3,
                                                 ssp4,ssp5, ssp6, ssp7,
                                                 ssp8}
                                                 } TDD-Config-v1130 ::= SEQUENCE {
            specialSubframePatterns-v1130 ENUMERATED {ssp7,ssp9}
 }
 TDD-Config-v14xy::= SEQUENCE {
            specialSubframePatterns-v14xy ENUMERATED {ssp10}
            } [Newly added signaling]
            TDD-ConfigSL-r12::= SEQUENCE {
            subframeAssignmentSL-r12 ENUMERATED {
                                                 none, sa0, sa1, sa2, sa3, sa4,
                                                 sa5, sa6}
 }
 --ASN1STOP
```

Alternatively, signaling may be added to a SystemInformationBlockType1 message to indicate whether a CRS is transmitted in a data region of the DwPTS.

```
 SystemInformationBlockType1-v14xy-IEs ::= SEQUENCE {
 eCallOverIMS-Support-r14 ENUMERATED {true}
 OPTIONAL, -- Need OR
        tdd-Config-v14xy TDD-Config-v14xy
        OPTIONAL, -- Cond TDD-OR
 [Newly added signaling]
 nonCriticalExtension SEQUENCE {}
 OPTIONAL
 }
```

Alternatively, signaling may be added to a RadioResourceConfigCommon information element to indicate whether a CRS is transmitted in a data region of the DwPTS.

```
 RadioResourceConfigCommon ::= SEQUENCE {
    rach-ConfigCommon RACH-ConfigCommon
    OPTIONAL, -- Need ON
    prach-Config PRACH-Config,
    pdsch-ConfigCommon PDSCH-ConfigCommon
    OPTIONAL, -- Need ON
    pusch-ConfigCommon PUSCH-ConfigCommon,
    phich-Config PHICH-Config
    OPTIONAL, -- Need ON
    pucch-ConfigCommon PUCCH-ConfigCommon
    OPTIONAL, -- Need ON
    soundingRS-UL-ConfigCommon SoundingRS-UL-ConfigCommon
    OPTIONAL, -- Need ON
    uplinkPowerControlCommon UplinkPowerControlCommon
    OPTIONAL, -- Need ON
    antennaInfoCommon AntennaInfoCommon
    OPTIONAL, -- Need ON
    p-Max P-Max
    OPTIONAL, -- Need OP
    tdd-Config TDD-Config
    OPTIONAL, -- Cond TDD
    ul-CyclicPrefixLength UL-CyclicPrefixLength,
    ...,
    [[uplinkPowerControlCommon-v1020 UplinkPowerControlCommon-v1020
    OPTIONAL -- Need ON
    ]],
    [[tdd-Config-v1130 TDD-Config-v1130
    OPTIONAL -- Cond TDD3
    ]],
    [[pusch-ConfigCommon-v1270 PUSCH-ConfigCommon-v1270
    OPTIONAL -- Need OR
    ]],
    [[prach-Config-v1310 PRACH-Config-v1310
    OPTIONAL, -- Need ON
       freqHoppingParameters-r13 FreqHoppingParameters-r13
       OPTIONAL, -- Need ON
       pdsch-ConfigCommon-v1310 PDSCH-ConfigCommon-v1310
       OPTIONAL, -- Need ON
       pucch-ConfigCommon-v1310 PUCCH-ConfigCommon-v1310
       OPTIONAL, -- Need ON
       pusch-ConfigCommon-v1310 PUSCH-ConfigCommon-v1310
       OPTIONAL, -- Need ON
       uplinkPowerControlCommon-v1310 UplinkPowerControlCommon-v1310
       OPTIONAL -- Need ON
    ]],
    [[highSpeedConfig-r14 HighSpeedConfig-r14
    OPTIONAL, -- Need OR
       prach-Config-v14xy PRACH-Config-v14xy
       OPTIONAL, -- Need OR
       tdd-Config-v14xy TDD-Config-v14xy
       OPTIONAL -- Cond TDD3
          [Newly added signaling]
    ]]
 }
```

In a specific implementation of the embodiment, the indication information may be used to indicate whether a PDSCH is transmitted in the DwPTS. Optionally, a base station scheduling may be used to choose whether to schedule a PDSCH resource.

Specifically, (1) for a special subframe configuration of 6:2:6, to reduce downlink transmission, the base station chooses not to schedule a PDSCH in six downlink symbols to transmit service data resources for a user. On a terminal side, assuming that PDSCH resources are not transmitted on the fourth, fifth, and sixth symbols of the DwPTS, the terminal does not perform demodulation of a PDSCH in the special subframe, as shown in Fig. 6.

Since a CRS for the fifth symbol is always present and can still be transmitted, interference is caused to a victim base station. As a common reference signal, a CRS is used in: (1) downlink channel quality measurement, for example, a reference signal receiving power (RSRP); and (2) downlink channel estimation, which is used for related detection and demodulation at a UE end.

In another specific implementation of the embodiment, in case that the indication information indicates that no CRS is transmitted on the fifth symbol of the DwPTS, and/or in case that the indication information indicates that a CRS is only transmitted on the first symbol of the DwPTS, the terminal performs measurement and/or channel estimation for demodulation in a special subframe based on only a CRS on the first symbol of the DwPTS.

The measurement and/or channel estimation for demodulation performed based on the CRS includes radio resource management (RRM) measurement and/or channel state information (CSI) measurement and/or channel estimation for demodulation of a PDCCH.

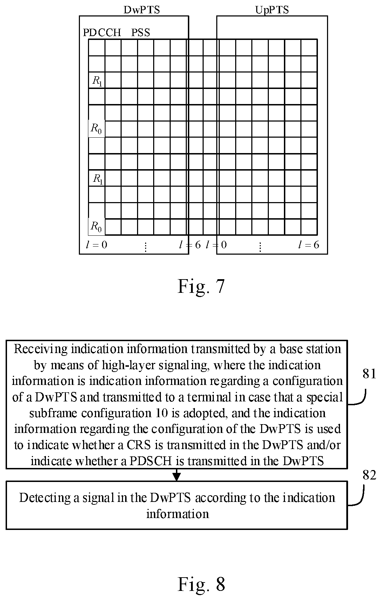

In Long Term Evolution (LTE), in this embodiment of the present disclosure, high-layer signaling indication is newly added. When the high-layer signaling indicates that no CRS is transmitted on the fifth symbol of the DwPTS in a special subframe configuration of 6:2:6 and/or the indication information indicates that a CRS is only transmitted on the first symbol of the DwPTS, the terminal performs measurement and/or channel estimation for demodulation in a special subframe based on only the CRS on the first symbol of the DwPTS, as shown in Fig. 7.

In the foregoing embodiment of the present disclosure, in case that a special subframe configuration 10 is adopted, indication information regarding a configuration of a DwPTS is transmitted to a terminal, where the indication information regarding the configuration of the DwPTS is used to indicate whether a CRS is transmitted in the DwPTS and/or indicate whether a PDSCH is transmitted in the DwPTS. The indication information is transmitted to the terminal by means of high-layer signaling. A special subframe configuration measurement behavior of the terminal is restricted, such that it is made clear that UE does not need to perform CRS measurement in a data region of a special subframe, thereby reducing interference from a remote base station.

The present disclosure further provides in some embodiments a base station, including: a processor, configured to: in case that a special subframe configuration 10 is adopted, transmit, to a terminal, indication information regarding a configuration of a DwPTS, where the indication information regarding the configuration of the DwPTS is used to indicate whether a CRS is transmitted in the DwPTS and/or indicate whether a PDSCH is transmitted in the DwPTS; and a transceiver, configured to transmit the indication information to the terminal. Specifically, the transceiver may transmit the indication information to the terminal by means of high-layer signaling.

The indication information is used to indicate whether a CRS is transmitted on the fifth symbol of the DwPTS; and/or the indication information is used to indicate that a CRS is only transmitted on the first symbol of the DwPTS.

The high-layer signaling is broadcast information transmission or UE specific RRC signaling.

It should be noted that the embodiment of the base station is a device corresponding to the foregoing method. All implementations in the foregoing method embodiment are applicable to the embodiment of the base station and can achieve the same technical effects.

As shown in Fig. 8, the present disclosure further provides in some embodiments a method of detecting a signal in a special subframe. The method includes: a step 81: receiving indication information transmitted by a base station, specifically, receiving indication information transmitted by means of high-layer signaling by the base station, where the indication information is indication information regarding a configuration of a DwPTS and transmitted to a terminal in case that a special subframe configuration 10 is adopted, and the indication information regarding the configuration of the DwPTS is used to indicate whether a CRS is transmitted in the DwPTS and/or indicate whether a PDSCH is transmitted in the DwPTS; and a step 82: detecting a signal in the DwPTS according to the indication information.

In a specific implementation of this embodiment of the present disclosure, in the step 81, when the indication information is used to indicate whether a CRS is transmitted on the fifth symbol of the DwPTS, the step 82 includes: in case that the indication information indicates that no CRS is transmitted on the fifth symbol of the DwPTS, performing, by the terminal, measurement and/or channel estimation for demodulation in a special subframe based on only a CRS on the first symbol of the DwPTS.

In a specific implementation of this embodiment of the present disclosure, in the step 81, when the indication information is used to indicate that a CRS is only transmitted on the first symbol of the DwPTS, the step 82 includes: according to the indication information, performing, by the terminal, measurement and/or channel estimation for demodulation in a special subframe based on only a CRS on the first symbol of the DwPTS.

In a specific implementation of this embodiment of the present disclosure, in the step 81, when the indication information is used to indicate whether a PDSCH is transmitted in the DwPTS, the step 82 includes: in case that the indication information indicates that no PDSCH is transmitted in the DwPTS, not performing, by the terminal, demodulation of a PDSCH in a special subframe.

In the embodiment of the present disclosure, the high-layer signaling is broadcast information transmission or UE specific RRC signaling. Indication information transmitted by means of high-layer signaling by a base station is received, where the indication information is indication information regarding a configuration of a DwPTS and transmitted to a terminal in case that a special subframe configuration 10 is adopted, and the indication information regarding the configuration of the DwPTS is used to indicate whether a CRS is transmitted in the DwPTS and/or indicate whether a PDSCH is transmitted in the DwPTS. A signal is detected in the DwPTS according to the indication information. A special subframe configuration measurement behavior of the terminal is restricted, such that it is made clear that UE does not need to measure a CRS in a data region of a special subframe, thereby reducing interference from a remote base station.

The present disclosure further provides in some embodiments a terminal, including: a transceiver, configured to receive indication information transmitted by a base station, specifically, receive indication information transmitted by means of high-layer signaling by the base station, where the indication information is indication information regarding a configuration of a DwPTS and transmitted to the terminal in case that a special subframe configuration 10 is adopted, and the indication information regarding the configuration of the DwPTS is used to indicate whether a CRS is transmitted in the DwPTS and/or indicate whether a PDSCH is transmitted in the DwPTS; and detect a signal in the DwPTS according to the indication information.

When the indication information is used to indicate whether a CRS is transmitted on the fifth symbol of the DwPTS, in case that the indication information indicates that no CRS is transmitted on the fifth symbol of the DwPTS, the terminal performs measurement and/or channel estimation for demodulation in a special subframe based on only a CRS on the first symbol of the DwPTS.

When the indication information is used to indicate that a CRS is only transmitted on the first symbol of the DwPTS, according to the indication information, the terminal performs measurement and/or channel estimation for demodulation in a special subframe based on only the CRS on the first symbol of the DwPTS.

When the indication information is used to indicate whether a PDSCH is transmitted in the DwPTS, in case that the indication information indicates that no PDSCH is transmitted in the DwPTS, the terminal does not perform demodulation of a PDSCH in a special subframe.

The high-layer signaling is broadcast information transmission or UE specific RRC signaling.

It should be noted that the embodiment of the terminal is a device corresponding to the foregoing method. All implementations in the foregoing method embodiment are applicable to the embodiment of the terminal and can achieve the same technical effects.

The present disclosure further provides in some embodiments a method of configuring a special subframe. The method includes: transmitting, by a first base station that remotely interferes with a second base station, a signal to a terminal based on a first configuration of a special subframe; and transmitting, by the second base station, a signal to the terminal based on a second configuration of a special subframe, where the first configuration includes a ratio of resources occupied by a DwPTS, a GP and an UpPTS in a special subframe being 3:5:6; and the second configuration includes a ratio of resources occupied by a DwPTS, a GP and an UpPTS in a special subframe being 9:3:2.

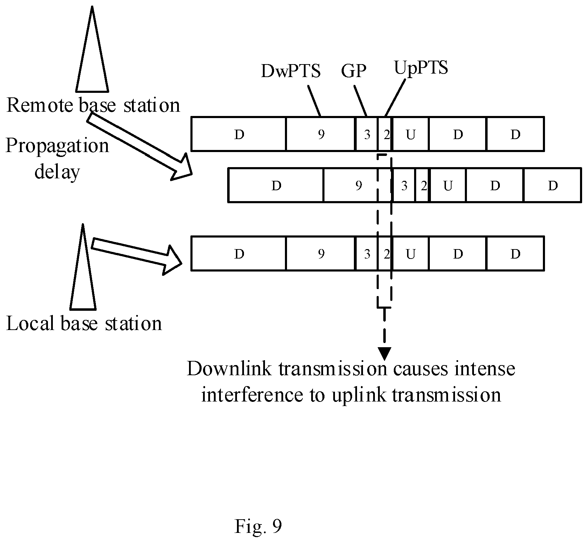

Specifically, as shown in Fig. 9, in case that the ratio of resources occupied by a DwPTS, a GP and an UpPTS in a special subframe being 9:3:2 is adopted in both a remote base station (an interfering base station) and a local base station, after a signal of the remote base station is delayed by a period of time during propagation, signals are simultaneously transmitted in an UpPTS of the local base station and a DwPTS of the remote base station. As a result, a downlink transmission of the interfering base station causes intense interference to an uplink transmission of a victim base station.

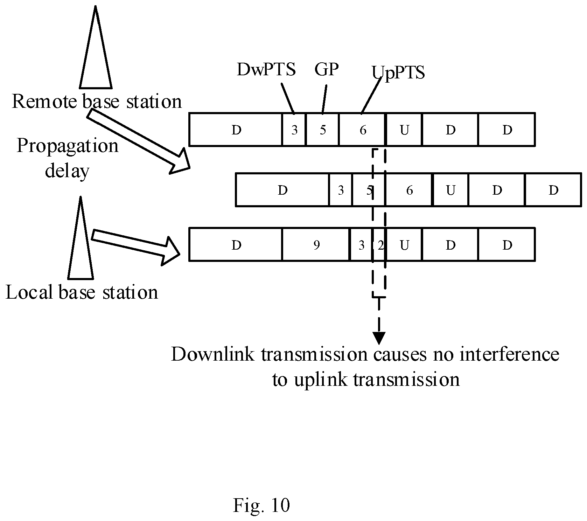

As shown in Fig. 10, after the ratio of resources occupied by a DwPTS, a GP and an UpPTS in a special subframe being 3:5:6 is adopted in a remote base station (an interfering base station), a GP in a special subframe of the interfering base station (the remote base station) corresponds to an uplink transmission UpPTS in a special subframe of a victim base station (a local base station). Therefore, a downlink transmission of the interfering base station does not interfere with the uplink transmission of the victim base station.

The present disclosure further provides in some embodiments a base station. The base station may adopt the foregoing configuration of a remote base station, and include: a processor, configured to configure a special subframe based on a first configuration of a special subframe, where the first configuration includes a ratio of resources occupied by a DwPTS, a GP and an UpPTS in a special subframe being 3:5:6; and a transceiver, configured to transmit a signal to a terminal based on the first configuration of a special subframe.

The present disclosure further provides in some embodiments a communication device, including: a processor and a storage storing therein a computer program, where the computer program is configured to be executed by the processor to perform the foregoing method.

The processor is connected to the storage via a bus or an interface. The communication device may be a network side device such as a base station, or may be the foregoing terminal.

The present disclosure further provides in some embodiments a computer-readable storage medium, storing therein a computer program, where the program is configured to be executed by a processor to implement the foregoing method.

In the embodiments provided in the present application, it should be understood that the disclosed device and method may be implemented in other manners. For example, the described device embodiment is merely an example. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented through some interfaces, indirect couplings or communication connections between the devices or units, and may be electrical connections, mechanical connections, or connections in other forms.

In addition, functional units in the embodiments of the present disclosure may be integrated into one processing unit, or each of the units may exist alone physically, or two or more units are integrated into one unit. The foregoing integrated units may be implemented in the form of hardware or may be implemented in the form of a combination of hardware and software functional units.

The integrated unit implemented in the form of software function units may be stored in a computer-readable storage medium. The software function units are stored in a storage medium and includes several instructions for instructing a computer device (which may be a personal computer, a server, a network device or the like) to perform some of the steps of the methods described in the embodiments of the present disclosure. The foregoing storage medium includes various media that can store program code, such as a Universal Serial Bus (USB) flash drive, a removable hard disk, a read-only memory (ROM), a random access memory (RAM), a magnetic disk or an optical disc.

The foregoing descriptions are merely specific implementations of the present disclosure. It should be noted that for a person of ordinary skill in the art, several improvements and modifications may further be made without departing from the principle of the present disclosure. These improvements and modifications should also be deemed as falling within the scope of the present disclosure.

## Claims

1. A method of configuring a special subframe, comprising:
in case that a special subframe configuration 10 is adopted, transmitting, to a terminal, indication information regarding a configuration of a downlink pilot timeslot (DwPTS), wherein the indication information regarding the configuration of the DwPTS is used to indicate whether a common reference signal (CRS) is transmitted in the DwPTS and/or indicate whether a physical downlink shared channel (PDSCH) is transmitted in the DwPTS; and
transmitting the indication information to the terminal.

2. The method according to claim 1, wherein the indication information is used to indicate whether a CRS is transmitted on the fifth symbol of the DwPTS.

3. The method according to claim 1, wherein the indication information is used to indicate that a CRS is only transmitted on the first symbol of the DwPTS.

4. The method according to claim 1, wherein in case that the indication information indicates that no CRS is transmitted on the fifth symbol of the DwPTS, the terminal performs measurement and/or channel estimation for demodulation in the special subframe based on only a CRS on the first symbol of the DwPTS.

5. The method according to claim 1, wherein in case that the indication information indicates that a CRS is only transmitted on the first symbol of the DwPTS, the terminal performs measurement and/or channel estimation for demodulation in the special subframe based on only the CRS on the first symbol of the DwPTS.

6. The method according to claim 1, wherein in case that the indication information indicates that no PDSCH is transmitted in the DwPTS, the terminal does not perform demodulation of a PDSCH in the special subframe.

7. A base station, comprising:
a processor, configured to: in case that a special subframe configuration 10 is adopted, transmit, to a terminal, indication information regarding a configuration of a downlink pilot timeslot (DwPTS), wherein the indication information regarding the configuration of the DwPTS is used to indicate whether a common reference signal (CRS) is transmitted in the DwPTS and/or indicate whether a physical downlink shared channel (PDSCH) is transmitted in the DwPTS; and
a transceiver, configured to transmit the indication information to the terminal.

8. The base station according to claim 7, wherein the indication information is used to indicate whether a CRS is transmitted on the fifth symbol of the DwPTS; and/or
the indication information is used to indicate that a CRS is only transmitted on the first symbol of the DwPTS.

9. A method of detecting a signal in a special subframe, comprising:
receiving indication information transmitted by a base station, wherein the indication information is indication information regarding a configuration of a downlink pilot timeslot (DwPTS) and transmitted to a terminal in case that a special subframe configuration 10 is adopted, and the indication information regarding the configuration of the DwPTS is used to indicate whether a common reference signal (CRS) is transmitted in the DwPTS and/or indicate whether a physical downlink shared channel (PDSCH) is transmitted in the DwPTS; and
detecting a signal in the DwPTS according to the indication information.

10. The method according to claim 9, wherein when the indication information is used to indicate whether a CRS is transmitted on the fifth symbol of the DwPTS,
the detecting a signal in the DwPTS according to the indication information comprises:
in case that the indication information indicates that no CRS is transmitted on the fifth symbol of the DwPTS, performing, by the terminal, measurement and/or channel estimation for demodulation in the special subframe based on only a CRS on the first symbol of the DwPTS.

11. The method according to claim 10,
wherein when the indication information is used to indicate that a CRS is only transmitted on the first symbol of the DwPTS,
the detecting a signal in the DwPTS according to the indication information comprises:
according to the indication information, performing, by the terminal, measurement and/or channel estimation for demodulation in the special subframe based on only the CRS on the first symbol of the DwPTS.

12. The method according to claim 9, wherein when the indication information is used to indicate whether a PDSCH is transmitted in the DwPTS,
the detecting a signal in the DwPTS according to the indication information comprises:
in case that the indication information indicates that no PDSCH is transmitted in the DwPTS, not performing, by the terminal, demodulation of a PDSCH in the special subframe.

13. A terminal, comprising:
a transceiver, configured to receive indication information transmitted by a base station, wherein the indication information is indication information regarding a configuration of a downlink pilot timeslot (DwPTS) and transmitted to the terminal in case that a special subframe configuration 10 is adopted, and the indication information regarding the configuration of the DwPTS is used to indicate whether a common reference signal (CRS) is transmitted in the DwPTS and/or indicate whether a physical downlink shared channel (PDSCH) is transmitted in the DwPTS; and
detect a signal in the DwPTS according to the indication information.

14. The terminal according to claim 13, wherein when the indication information is used to indicate whether a CRS is transmitted on the fifth symbol of the DwPTS, in case that the indication information indicates that no CRS is transmitted on the fifth symbol of the DwPTS, the terminal performs measurement and/or channel estimation for demodulation in a special subframe based on only a CRS on the first symbol of the DwPTS.

15. The terminal according to claim 13, wherein when the indication information is used to indicate that a CRS is only transmitted on the first symbol of the DwPTS, according to the indication information, the terminal performs measurement and/or channel estimation for demodulation in a special subframe based on only a CRS on the first symbol of the DwPTS.

16. The terminal according to claim 13, wherein when the indication information is used to indicate whether a PDSCH is transmitted in the DwPTS, in case that the indication information indicates that no PDSCH is transmitted in the DwPTS, the terminal does not perform demodulation of a PDSCH in a special subframe.

17. A method of configuring a special subframe, comprising:
transmitting, by a first base station that remotely interferes with a second base station, a signal to a terminal based on a first configuration of a special subframe; and
transmitting, by the second base station, a signal to the terminal based on a second configuration of a special subframe, wherein
the first configuration comprises a ratio of resources occupied by a downlink pilot timeslot (DwPTS), a guard period (GP) and an uplink pilot timeslot (UpPTS) in a special subframe being 3:5:6; and
the second configuration comprises the ratio of resources occupied by a DwPTS, a GP and an UpPTS in a special subframe being 9:3:2.

18. A base station, comprising:
a processor, configured to configure a special subframe based on a first configuration of the special subframe, wherein the first configuration comprises a ratio of resources occupied by a downlink pilot timeslot (DwPTS), a guard period (GP) and an uplink pilot timeslot (UpPTS) in the special subframe being 3:5:6;
a transceiver, configured to transmit a signal to a terminal based on the first configuration of the special subframe.

19. A communication device, comprising: a processor and a storage storing therein a computer program, wherein the computer program is configured to be executed by the processor to implement the method according to any one of claims 1 to 6 or the method according to any one of claims 9 to 12.

20. A computer-readable storage medium, storing therein a computer program, wherein the computer program is configured to be executed by a processor to implement the method according to any one of claims 1 to 6 or the method according to any one of claims 9 to 12.
